# FASCICULE DE BREVET EUROPEEN

(11) **EP 2 077 926 B1**
(45) Date de publication et mention de la délivrance du brevet: **08.12.2010**
(21) Numéro de dépôt: 07823672.6
(22) Date de dépôt: 31.07.2007
(51) Int. Cl.: B23P 6/00, B21J 15/02, B23K 9/20, B21J 15/50, B62D 27/02, B62D 25/06

(54) **REPARATION DES LIAISONS RIVETEES DE PAVILLON**
REPARATUR DER NIETVERBINDUNGEN EINES FAHRZEUGDACHS
REPAIR OF THE RIVETED JOINTS OF A VEHICLE ROOF

(30) Priorité: 19.09.2006 FR 0608176
(43) Date de publication de la demande: 15.07.2009
(73) Titulaire: Renault SAS, 92100 Boulogne Billancourt (FR)
(72) Inventeur: HALCEWICZ, Norbert, F-CLAMART 92140 (FR); VERSCHAVE, Christophe, F-91430 Vauhallan (FR)
(86) Numéro de dépôt international: PCT/FR2007/051760
(87) Numéro de publication internationale: WO 2008/034983

(56) Documents cités:
- DE-C1- 4 320 068
- JP-A- 10 205 511
- JP-A- 62 238 081
- US-A- 3 787 130
- US-A1- 2005 161 965

## Description

L'invention concerne un procédé de réparation de liaisons rivetées suivant le préambule de la revendication 1 et plus particulièrement un procédé de réparation de liaisons rivetées pour pavillon aluminium d'automobile. L'invention concerne aussi un appareil de soudage suivant le préambule de la revendication 8.

Habituellement les pavillons en aluminium d'automobile sont liés à la caisse acier par des liaisons rivetées localisées en de multiples points sur la périphérie du pavillon.

De manière connue, chacune des liaisons rivetées est une liaison en trois épaisseurs, permettant de lier le renfort de brancard, le côté de caisse ainsi que le pavillon.

Ces trois éléments sont disposés en couches parallèles depuis respectivement l'intérieur du véhicule vers l'extérieur, et la tête du rivet est au contact du pavillon.

Lors d'une réparation du pavillon, les procédés habituels imposent de scalexer la tête du rivet afin de déposer le pavillon à échanger. En effet, une fois la tête du rivet scalexée, le rivet peut être retiré et le pavillon peut être déposé.

Pour procéder au remplacement du pavillon, les solutions existantes prévoient de reposer un pavillon de remplacement en lieu et place du pavillon retiré et de le fixer par collage. Ce pavillon de remplacement est fixé par collage sur les côtés de caisse et les renforts de brancard. La tenue d'une liaison collée dépend étroitement de la qualité des surfaces à coller qui ne doivent pas présenter de surépaisseur.

Or, afin d'assurer la tenue mécanique entre les côtés de caisse et les renforts de brancards, il est nécessaire de remplacer la liaison rivetée, ce qui empêche d'avoir une surface de contact satisfaisante pour procéder au collage du pavillon de remplacement.

De plus, d'autres éléments du véhicule, comme par exemple la doublure de brancard limitent considérablement l'accessibilité des zones de liaisons entre les côtés de caisse et le renfort de brancard. Ainsi, les points de liaison entre le côté de caisse et le renfort de brancard ne peuvent être décalés par rapport aux points de liaison initiaux et l'assemblage doit donc être refait en lieu et place des rivets scalexés.

Par conséquent, l'état de surface obtenu en mettant en oeuvre les procédés connus de réparation n'est pas satisfaisant, et la tenue mécanique de ces liaisons est limitée.

On connaît par exemple du document US 3 787 130, qui décrit un procédé selon le préambule de la revendication 1, un procédé de réparation d'un toit de véhicule connecté au véhicule par une liaison rivetée. Toutefois, le pavillon est relié avec l'élément de support au moyen de liaisons rivetées uniquement de deux éléments. En outre, les rivets sont complètement enlevés et d'autres rivets sont posés pour fixer le nouveau pavillon.

D'autres solutions consistent à effectuer un bouchonnage. Ces solutions proposent de trouer chacune des liaisons rivetées, le trou étant de dimension suffisante pour englober le rivet et permettre son évacuation. Une fois le pavillon à réparer déposé, il est prévu une étape de soudure, visant à combler par un métal d'apport le trou réalisé afin de recréer une liaison entre le côté de caisse et le renfort de brancard. La liaison obtenue au point de soudure présente une protubérance qu'il est nécessaire d'aplanir par meulage avant de procéder au collage du pavillon de remplacement.

Le bouchonnage présente comme inconvénient majeur qu'après soudure, une opération de rectification de l'état de surface doit être menée pour chacun des points de soudure. Le nombre de ces points de soudure étant habituellement de l'ordre de quarante à cinquante, une telle opération nécessite un temps considérable.

Cette solution n'est donc pas satisfaisante dans un contexte de limitation des temps et des coûts de réparation.

On connait par exemple du document JP-10 205 511, un appareil de soudage suivant le préambule de la revendication 8 et adapté pour le soudage de rivets.

L'invention vise à améliorer les procédés existants de réparation de pavillon pour véhicule.

Pour atteindre ces objectifs, il est prévu dans le cadre de la présente invention un procédé de réparation d'un pavillon de toit de véhicule suivant les caractéristiques de la revendication 1.

Ainsi, au point de liaison, le côté de caisse et le renfort de brancard sont liés par une soudure localisée en périphérie d'un creux laissé par la tête scalexée du rivet.

La surface de contact destinée à recevoir le pavillon ne comporte pas de protubérance due à une tête de rivet de remplacement contrairement aux procédés connus. Cette surface de contact présente donc une meilleure qualité pour accueillir un pavillon par collage. Par conséquent, la liaison du pavillon obtenue suite au collage présente une tenue améliorée.

De plus, le remplacement du pavillon est effectué de façon simple, et rapide.

Le procédé selon l'invention pourra en outre présenter facultativement au moins l'une des caractéristiques suivantes décites dans les revendications dépendantes:
- au moins l'un parmi les pavillons déposé et neuf est en aluminium ou en un autre matériau ne se prêtant pas au soudage,
- on supprime la tête de rivet par abrasion, typiquement au moyen d'une meule,
- on effectue la soudure en périphérie du creux 8 laissé par la tête de rivet, de sorte qu'elle ne forme pas une protubérance saillante par rapport à la surface destinée à accueillir le pavillon neuf,
- on effectue la soudure en une seule opération, à l'aide d'un appareil comportant des électrodes de soudage et permettant d'autocentrer les électrodes sur une protubérance formée par le pied du rivet,
- on effectue la soudure de manière à forcer le passage du courant dans une zone d'étendue restreinte par rapport aux dimensions radiales du rivet, et de manière à obtenir deux points ponctuels de soudure,
- on effectue les deux points de soudure de manière à ce qu'ils soient adjacents d'une part au pied et d'autre part à la périphérie du creux formé suite à la suppression de la tête de rivet et à ce qu'ils soient symétriquement disposés par rapport à un axe de symétrie de révolution du rivet.

Il est également prévu dans le cadre de l'invention un appareil de soudage suivant les caractéristiques de la revendication 8.

En outre cet appareil procédé pourra présenter facultativement les caractéristiques suivantes décrites dans la revendication dépendante :
- les pattes sont agencées de manière à présenter une surface restreinte par rapport aux dimensions radiales du rivet, et soient disposées de façon adjacente d'une part au pied et d'autre part à l'extrémité supérieure du rivet restée libre suite à la suppression de la tête,
- les pattes sont disposées symétriquement par rapport à un axe de symétrie de révolution du rivet lorsque les électrodes sont en position de soudage.

D'autres caractéristiques, buts et avantages de la présente invention apparaîtront à la lecture de la description détaillée qui va suivre, et en regard des dessins annexés, donnés à titre d'exemples non limitatifs et sur lesquels :
La figure 1, est une demi vue en coupe axiale d'un point de rivetage avant dépose du pavillon à réparer.
La figure 2, est une demi vue en coupe axiale d'un point de rivetage après dépose du pavillon à réparer.
Les figures 3 et 4, sont des vues en perspective d'un exemple d'appareil de soudage permettant de mettre en oeuvre le procédé selon l'invention.
La figure 5, est une vue partielle en coupe axiale de l'étape de soudage réalisée avec l'appareil des figures 3 et 4.
Les figures 6a et 6b, sont des vues radiales d'un exemple de soudure obtenue avec l'appareil des figures 3 et 4.

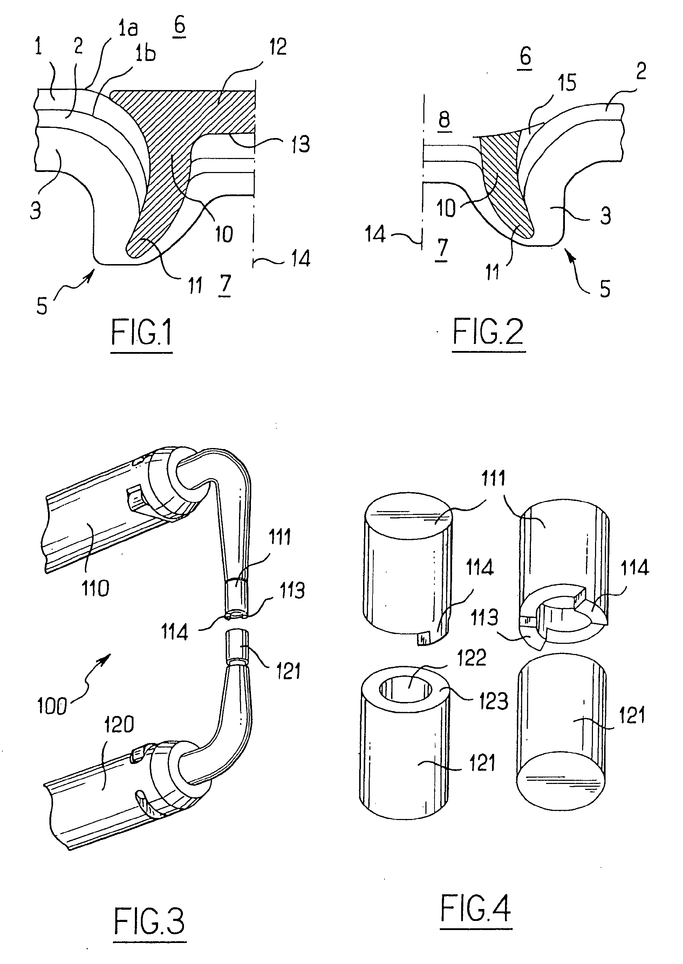

En référence à la figure 1, on a illustré une liaison avant réparation d'un pavillon.

Pour la compréhension de cette invention, la réparation du pavillon 1 sera décrite comme ne comportant qu'une seule liaison rivetée. Les enseignements de cette invention sont évidement applicables à chacune des multiples liaisons rivetées que pourrait présenter un véhicule pour assurer le remplacement de son pavillon.

Cette liaison permet la tenue mécanique entre trois éléments superposés de manière sensiblement parallèle.

Ces trois éléments, selon un exemple de réalisation, sont un pavillon 1, un renfort de brancard 3 et un côté de caisse 2 solidaire de la caisse du véhicule, respectivement disposés depuis l'extérieur 6 du véhicule vers l'intérieur 7 du véhicule. Ainsi, une face inférieure 1b du pavillon 1 est au contact du renfort de brancard 3 et une face supérieure 1a de ce pavillon 1 est orientée vers l'extérieur 6 du véhicule.

Ces trois éléments sont liés par un rivet 10. Ce rivet 10, connu en soi, est de type rivet 10 auto-poinçonneur est comporte un pied 11 et une tête 12. La tête 12 présente une paroi inférieure 13 orientée vers le pied 11 et sensiblement parallèle à la face supérieure 1a du pavillon 1 ainsi qu'une paroi supérieure située à l'extrémité de la tête 12 de rivet 10.

Le rivet 10 présente une forme sensiblement symétrique de révolution et définit ainsi un axe de symétrie de révolution, désigné par la suite axe 14 du rivet 10.

Dans la liaison rivetée comportant le pavillon 1 à échanger, la paroi inférieure 13 de la tête 12 de rivet 10 est au contact de la face supérieure 1a du pavillon 1.

La tête 12 de rivet 10 est enfoncée dans le pavillon 1 de manière à constituée une surface sensiblement plane avec la paroi supérieur 1a du pavillon 1.

Lors de la mise en place du rivet 10, le pied 11 provoque une déformation de la face inférieure du renfort de brancard 3. Ainsi, la liaison présente une protubérance 5 tournée vers l'intérieur 7 du véhicule.

Lorsque le pavillon 1 nécessite d'être remplacé, la liaison initiale doit être démontée.

Ainsi, on prévoit une étape visant à éliminer la tête 12 du rivet 10. Cette étape, appelée scalexage, peut par exemple être effectuée par abrasion de la tête 12 à l'aide d'une meule en bakélite.

Une telle étape d'abrasion permet, de manière avantageuse, de rectifier des défauts éventuels de surface et permet ainsi d'obtenir une surface parfaitement plane aux abords de la liaison rivetée.

La figure 2 illustre la liaison initiale après l'étape de scalexage. La tête 12 de rivet 10 est supprimée et l'espace qu'elle occupait demeure et laisse place à un creux 8.

La tête 12 de rivet 10 ne formant plus une retenue pour le pavillon 1, celui-ci peut alors être retiré.

La tenue de la liaison entre le côté de caisse 2 et le renfort de brancard 3 n'étant plus assurée, on prévoit de souder ces deux éléments.

La soudure effectuée est une soudure deux épaisseurs, réalisée en utilisant une technique de soudage standard.

Afin de réaliser cette soudure on utilise selon un aspect de l'invention un appareil spécialement adapté à cette opération.

Cet appareil, illustré en figure 3, comporte deux bras 110, 120 aux extrémités de chacune desquelles se trouve une électrode 111, 121. La forme des bras 110, 120, de manière avantageuse, est courbée afin d'améliorer l'accessibilité aux zones à souder.

La forme des électrodes est par la suite détaillée en référence à la figure 4 notamment.

Une première électrode 121 présente une forme cylindrique de révolution définissant un axe de première électrode 121.

Cette électrode 121 est fixée par une première de ces extrémités à un premier bras 120. Une seconde extrémité de cette électrode 121, opposée à la première et restée libre, présente un alésage définissant un évidemment 122 coaxial à l'axe de première électrode 121.

La paroi de la première électrode 121 formant l'évidemment 122 définit une surface désignée paroi de contact 123, perpendiculaire à l'axe de première électrode 121 et située à l'extrémité libre de cette même électrode 121.

Une seconde électrode 111, disposée à l'extrémité du deuxième bras 110, s'étendant selon un axe de deuxième électrode 111. Cette deuxième électrode 111 présente une extrémité libre munie de deux pattes 113, 114 saillantes.

Les premières et deuxième électrodes 121, 111 sont agencées de manières à ce que lorsque elles sont disposées coaxialement avec leurs extrémités libre au regard et en contact l'une de l'autre, les pattes 113, 114 soient disposées au droit de la paroi de contact 123.

La longueur et la surface des pattes 113, 114 dans un plan radial sont choisies de sorte que la surface de contact est limitée lors du soudage. Cette surface de contact, par laquelle passe le courant lors du soudage doit notamment être de dimension restreinte par rapport aux dimensions radiales du rivet.

Ainsi, cette configuration particulière des électrodes permet de forcer le passage du courant et de concentrer l'énergie de soudage en un point précis. La soudure obtenue est donc ponctuelle, localisée et offre une tenue améliorée.

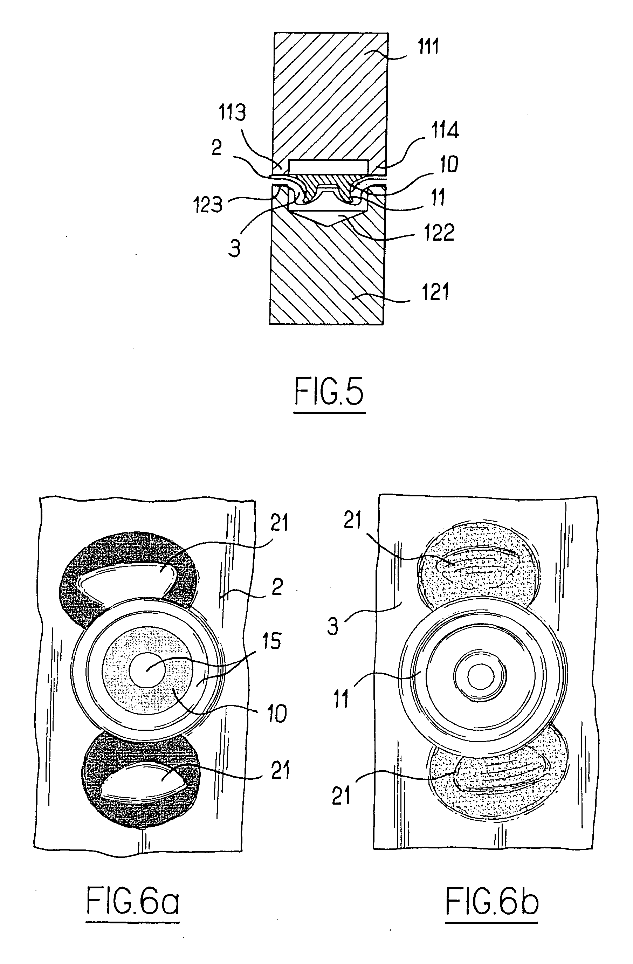

En référence à la figure 5, la disposition relative des électrodes par rapport au rivet 10 lors du soudage va maintenant être détaillée. Cette position est désignée position de soudage.

Lors du soudage, les axes des premières et deuxièmes électrodes sont disposés coaxialement à l'axe 14 du rivet 10.

Avantageusement, l'évidement de la première électrode 121 permet à l'opérateur d'autocentrer cette électrode sur la protubérance 5, de manière à ce que la protubérance 5 pénètre, au moins partiellement, dans l'alésage et que la paroi de contact 123 soit au contact de la face inférieure du renfort de brancard 3. Le positionnement de l'appareil de soudage est donc simplifié. Ainsi, l'opération de soudage est plus sûre, nécessite un temps opératoire réduit, et permet l'obtention de soudure de qualité améliorée.

La deuxième électrode 111 est disposée coaxialement à la première, les pattes 113, 114 étant situées au droit de la paroi de contact 123, et au contact de la face supérieure du côté de caisse 2.

De plus, les dimensions respectives des première et deuxième électrodes 121, 111 sont choisies de manière à ce que les points de soudure 21, 21 soient adjacents au pied 11 d'une part et au creux formé suite à l'opération de scalexage, et soient situés symétriquement par rapport à l'axe 14 du rivet 10.

Ces caractéristiques particulières des points de soudure 21, 21 permettent de répartir les contraintes et contribuent ainsi à améliorer la tenue de l'assemblage.

On comprendra aisément que la forme, extérieure notamment, des l'électrodes, ou le nombre de pattes 113, 114 de la deuxième électrode 111 peuvent être modifiées sans sortir de la portée de l'invention.

Les figures 6a et 6b illustrent la disposition de ces deux points de soudure 21, 21.

Cette liaison soudée permet donc d'assurer la tenue mécanique entre le côté de caisse 2 et le renfort de brancard 3 qui n'étaient plus liés suite à la suppression de la tête 12 du rivet 10.

Avantageusement, cette liaison est réalisée en lieu est place de la liaison rivetée initiale. Cette caractéristique permet de prendre parfaitement en compte les contraintes d'accessibilité dues notamment aux doublures de brancard qui limitent considérablement les possibilités d'accès pour effectuer ce type de soudure.

Les procédés existants prévoient la mise en place d'un rivet de remplacement afin de lier le coté de caisse et le renfort de brancard. Ces procédés font donc nécessairement apparaître une protubérance, due à la tête de ce rivet de remplacement, sur la surface de contact destinée à accueillir le pavillon neuf.

En prévoyant de lier le coté de caisse et le renfort de brancard par deux points de soudure localisés en périphérie du creux 8, l'invention permet d'améliorer l'état de surface en vue du collage du pavillon neuf par rapport aux procédés existants.

En effet, si les paramètres de soudure sont correctement réglés, les points de soudure ne forment sensiblement pas de protubérance sur la surface de contact.

Le pavillon neuf peut alors être positionné en lieu et place du pavillon 1 déposé.

Une fixation par collage est ensuite prévue. Cette fixation présente une tenue améliorée puisqu'il n'y a pas de surépaisseur à l'interface entre le pavillon 1 et la surface qui l'accueille. Par conséquent, les risques de décollement sont réduits.

Cette solution n'impliquant pas de soudure au niveau du pavillon 1 est d'autant plus avantageuse lorsque celui-ci est constitué d'aluminium, ou en tout autre matériau ne se prêtant pas à une opération de soudage.

En effet, la localisation des points ponctuels de soudure, dans une zone périphérique au creux 8 permet d'éviter que les portions 15 du pavillon déposé en aluminium restées piégées par le rivet initial ne perturbent la soudure. En déportant la soudure en périphérie du creux, on s'assure de faire fondre l'acier du coté de caisse avant l'aluminium des portions 15.

La tenue mécanique et la qualité de l'état de surface sont donc préservées.

Avantageusement, le procédé selon l'invention présente une grande simplicité de mise en oeuvre et permet de réduire les temps opératoires.

Les avantages liés à la simplicité et à la rapidité de mise en oeuvre d'un tel procédé sont d'autant plus appréciables que le nombre de points de liaison est important.

Les coûts qu'induisent de telles opérations de réparation sont donc sensiblement réduits.

En outre, ce procédé est sûr et permet de limiter substantiellement les risques d'échec d'une réparation du pavillon.

De plus, la tenue des liaisons obtenues, tant entre le renfort de brancard 3 et le côté de caisse 2 qu'entre le pavillon 1 de toit et le côté de caisse 2 présentent des tenues mécaniques améliorées.

Enfin, ce procédé permet de prendre parfaitement en compte les contraintes influençant ce type de réparation et liées en particulier au matériau du pavillon 1 ou à l'accessibilité réduite des zones de liaison.

## Revendications

1. Procédé de réparation d'un pavillon (1) de toit de véhicule, le pavillon étant lié au véhicule par au moins une liaison rivetée enserrant des éléments superposés, l'un de ces éléments (2) étant solidaire de la caisse, et un autre de ces éléments étant un pavillon, le pavillon présentant une face (1a) au contact d'une tête (12) d'un rivet (10), **caractérisé en ce que** :
- le pavillon est lié au véhicule par au moins une liaison rivetée enserrant au moins trois éléments superposés,
- on supprime la tête de rivet,
- on dépose le pavillon à remplacer,
- on effectue une soudure localisée en périphérie d'un creux (8) laissé par la tête supprimée du rivet afin de lier les premier et deuxième éléments et,
- on pose et fixe par collage un pavillon neuf en lieu et place du pavillon déposé.

2. Procédé selon la revendications précédente, **caractérisé en ce qu'**au moins l'un parmi les pavillons déposé et neuf est en aluminium ou en un autre matériau ne se prêtant pas au soudage.

3. Procédé selon l'une quelconque des revendications précédentes, **caractérisé en ce qu'**on supprime la tête (12) de rivet (10) par abrasion, typiquement au moyen d'une meule.

4. Procédé selon l'une quelconque des revendications précédentes, **caractérisé en ce qu'**on effectue la soudure en périphérie du creux (8) laissé par la tête (12) de rivet (10), de sorte qu'elle ne forme pas une protubérance saillante par rapport à la surface destinée à accueillir le pavillon neuf.

5. Procédé selon l'une quelconque des revendications précédentes, **caractérisé en ce qu'**on effectue la soudure en une seule opération, à l'aide d'un appareil comportant des électrodes de soudage et permettant d'autocentrer les électrodes sur une protubérance (5) formée par le pied 5 (11) du rivet (10).

6. Procédé selon l'une quelconque des revendications précédentes, **caractérisé en ce qu'**on effectue la soudure de manière à forcer le passage du courant dans une zone d'étendue restreinte par rapport aux dimensions radiales du rivet, et de manière à obtenir deux points ponctuels de soudure (21, 21).

7. Procédé selon la revendication précédente, **caractérisé en ce qu'**on effectue les deux points de soudure (21, 21) de manière à ce qu'ils soient adjacents d'une part au pied (11) et d'autre part à la périphérie du creux (8) formé suite à la suppression de la tête (12) de rivet (10) et à ce qu'ils soient symétriquement disposés par rapport à un axe (14) de symétrie de révolution du rivet (10).

8. Appareil de soudage comportant deux électrodes (111, 121), une première électrode (121) présentant un évidement permettant un autocentrage de cette première électrode (121) sur le pied (11) du rivet (10) et définissant une paroi de contact (123), et **caractérisé en ce** procédé permet de mettre en oeuvre le procédé selon l'une quelconque des revendications 1 à 7, et en ce qu'il comporte une deuxième électrode (111) présentant deux pattes (113, 114) dont les extrémités sont au droit de la paroi de contact (123) lorsque les électrodes sont disposées en position de soudage, les pattes (113, 114) étant agencées de manière à présenter une surface restreinte par rapport aux dimensions radiales du rivet, et sont disposées de façon adjacente d'une part au pied (11) et d'autre part à l'extrémité supérieure du rivet (10) restée libre suite à la suppression de la tête (12).

9. Appareil selon la revendication précédente, **caractérisé en ce que** les pattes (113, 114) sont disposées symétriquement par rapport à un axe (14) de symétrie de révolution du rivet (10) lorsque les électrodes (111, 121) sont en position de soudage.

## Claims

1. Method for repairing a vehicle roof (1), the roof being connected to the vehicle by at least one riveted joint that clamps together the relative superposed parts, one of these parts (2) being integral with the body, and another of these parts being a roof, and the roof having a face (1a) in contact with a head (12) of a rivet (10); said method being **characterized in that**:
• the roof is connected to the vehicle by at least one riveted joint that clamps together at least three superposed parts,
• the rivet head is removed,
• the roof to be replaced is removed,
• a localized weld is made at the periphery of a depression (8) left by the removed head of the rivet in order to connect together the first and second parts, and
• a new roof is put in position and attached by adhesive bonding in place of the removed roof.

2. Method according to the preceding claim, **characterized in that** the removed roof and/or the new roof is/are in aluminium or another difficult-to-weld material.

3. Method according to either of the preceding claims, **characterized in that** the rivet (10) head (12) is removed by abrasion, typically by means of a grinding wheel.

4. Method according to any one of the preceding claims, **characterized in that** the periphery of the depression (8) left by the rivet (10) head (12) is welded in such a way that it does not form a protuberance projecting above the surface intended to take the new roof.

5. Method according to any one of the preceding claims, **characterized in that** the weld is done in a single operation, using an apparatus comprising welding electrodes and capable of auto-centring the electrodes on a protuberance (5) formed by the stem (11) of the rivet (10).

6. Method according to any one of the preceding claims, **characterized in that** the weld is done in such a way as to force the current through a region of limited area compared with the radial dimensions of the rivet, and in such way as to obtain two small weld spots (21, 21).

7. Method according to the preceding claim, **characterized in that** the two weld spots (21, 21) are made in such a way that they are adjacent both to the stem (11) and to the periphery of the depression (8) left by the removal of the rivet (10) head (12) and in such a way that they are symmetrically arranged about an axis (14) of symmetry of revolution of the rivet (10).

8. Welding apparatus comprising two electrodes (111, 121), a first electrode (121) having a recess allowing auto-centring of this first electrode (121) on the stem (11) of the rivet (10) and defining a contact wall (123), and **characterized in that** this apparatus makes it possible to carry out the method according to any one of Claims 1 to 7, and **in that** it comprises a second electrode (111) having two lugs (113, 114) whose ends are directly adjacent to the contact wall (123) when the electrodes are in the welding position, the lugs (113, 114) being so arranged as to present a limited surface area compared with the radial dimensions of the rivet, and are adjacent both to the stem (11) and to the upper end of the rivet (10) which was exposed by the removal of the head (12).

9. Apparatus according to the preceding claim, **characterized in that** the lugs (113, 114) are arranged symmetrically about an axis (14) of symmetry of revolution of the rivet (10) when the electrodes (111, 121) are in the welding position.

## Patentansprüche

1. Verfahren zur Reparatur eines Fahrzeugdach-Verdecks (1), wobei das Verdeck mit dem Fahrzeug über mindestens eine Nietverbindung verbunden ist, die übereinander angeordnete Elemente umklammert, wobei eines dieser Elemente (2) mit der Karosserie verbunden ist, und ein anderes dieser Elemente ein Verdeck ist, wobei das Verdeck eine Seite (1a) in Kontakt mit einem Kopf (12) eines Niets (10) hat, **dadurch gekennzeichnet, dass**:
- das Verdeck mit dem Fahrzeug über mindestens eine Nietverbindung verbunden ist, die mindestens drei übereinander angeordnete Elemente umklammert,
- der Nietkopf entfernt wird,
- das zu ersetzende Verdeck abgesetzt wird,
- eine lokale Schweißnaht am Umfang einer vom entfernten Kopf des Niets hinterlassenen Vertiefung (8) durchgeführt wird, um das erste und das zweite Element zu verbinden, und
- ein neues Verdeck aufgebracht und durch Kleben anstelle des abgesetzten Verdecks befestigt wird.

2. Verfahren nach dem vorhergehenden Anspruch, **dadurch gekennzeichnet, dass** mindestens eines, das abgesetzte Verdeck oder das neue Verdeck, aus Aluminium oder einem anderen Werkstoff ist, der nicht zum Schweißen geeignet ist.

3. Verfahren nach einem der vorhergehenden Ansprüche, **dadurch gekennzeichnet, dass** der Kopf (12) des Niets (10) durch Abrieb entfernt wird, typischerweise mit Hilfe einer Schleifscheibe.

4. Verfahren nach einem der vorhergehenden Ansprüche, **dadurch gekennzeichnet, dass** die Schweißnaht am Umfang der vom Kopf (12) des Niets (10) hinterlassenen Vertiefung (8) so durchgeführt wird, dass sie keine bezüglich der Fläche, die dazu bestimmt ist, das neue Verdeck aufzunehmen, vorstehende Verdickung bildet.

5. Verfahren nach einem der vorhergehenden Ansprüche, **dadurch gekennzeichnet, dass** die Schweißnaht in einem Arbeitsgang mit Hilfe eines Geräts ausgeführt wird, das Schweißelektroden aufweist und es ermöglicht, die Elektroden auf einer vom Fuß (11) des Niets (10) gebildeten Verdickung (5) selbst zu zentrieren.

6. Verfahren nach einem der vorhergehenden Ansprüche, **dadurch gekennzeichnet, dass** die Schweißnaht derart, dass der Durchgang des Stroms in einer Zone beschränkter Ausdehnung bezüglich der radialen Abmessungen des Niets erzwungen und derart ausgeführt wird, dass zwei punktförmige Schweißpunkte (21, 21) erhalten werden.

7. Verfahren nach dem vorhergehenden Anspruch, **dadurch gekennzeichnet, dass** die zwei Schweißpunkte (21, 21) so ausgeführt werden, dass sie einerseits dem Fuß (11) und andererseits dem Umfang der von der Entfernung des Kopfes (12) des Niets (10) hinterlassenen Vertiefung (8) benachbart sind, und dass sie bezüglich einer Drehsymmetrieachse (14) des Niets (10) symmetrisch angeordnet sind.

8. Schweißgerät, das zwei Elektroden (111, 121) aufweist, wobei eine erste Elektrode (121) eine Aussparung hat, die eine Selbstzentrierung dieser ersten Elektrode (121) auf dem Fuß (11) des Niets (10) erlaubt und eine Kontaktwand (123) bildet, und **dadurch gekennzeichnet, dass** dieses Gerät es ermöglicht, das Verfahren nach einem der Ansprüche 1 bis 7 anzuwenden, und dass es eine zweite Elektrode (111) aufweist, die zwei Laschen (113, 114) hat, deren Enden sich angrenzend an der Kontaktwand (123) befinden, wenn die Elektroden in der Schweißstellung angeordnet sind, wobei die Laschen (113, 114) so eingerichtet sind, dass sie eine bezüglich der radialen Abmessungen des Niets beschränkte Fläche haben und einerseits dem Fuß (11) und andererseits dem oberen Ende des Niets (10) benachbart angeordnet sind, das nach dem Entfernen des Kopfes (12) frei geblieben ist.

9. Gerät nach dem vorhergehenden Anspruch, **dadurch gekennzeichnet, dass** die Laschen (113, 114) bezüglich einer Drehsymmetrieachse (14) des Niets (10) symmetrisch angeordnet sind, wenn die Elektroden (111, 121) in der Schweißstellung sind.
